Europäisches Patentamt

European Patent Office

Office européen des brevets

(19)

(11) Numéro de publication: **0 127 524**
**B1**

(12) **FASCICULE DE BREVET EUROPEEN**

(45) Date de publication du fascicule du brevet:
09.03.88

(21) Numéro de dépôt: **84401015.7**

(22) Date de dépôt: **17.05.84**

(51) Int. Cl.⁴: **B 27 B 19/04,** B 27 B 19/06 //
H02K33/02, B23Q1/02

(54) Scie à chantourner.

(30) Priorité: **25.05.83 FR 8308616**

(43) Date de publication de la demande:
**05.12.84 Bulletin 84/49**

(45) Mention de la délivrance du brevet:
**09.03.88 Bulletin 88/10**

(84) Etats contractants désignés:
**AT BE CH DE GB IT LI LU NL SE**

(56) Documents cités:
**DE - C - 370 107**
**FR - A - 893 125**
**GB - A - 484 653**
**US - A - 2 602 475**
**US - A - 2 771 102**
**US - A - 2 780 249**
**US - A - 2 884 027**

(73) Titulaire: **Charonnat, Marcel, 34 rue Sambre et Meuse,**
**F-75010 Paris (FR)**

(72) Inventeur: **Charonnat, Marcel, 34 rue Sambre et Meuse,**
**F-75010 Paris (FR)**

(74) Mandataire: **Sauvage, Renée, Cabinet Sauvage 100 bis,**
**avenue de Saint-Mandé, F-75012 Paris (FR)**

ACTORUM AG

### Description

La présente invention concerne, d'une manière générale, une scie électro-magnétique à chantourner telle que définie dans le préambule de la revendication 1.

Dans les scies connues, par exemple du brevet US-A-2 602 475, l'autre extrémité de la lame est solidarisée en bout d'un bras à effet ressort revêtant la forme générale d'un U et dont la fonction essentielle est de tendre la lame. L'une des extrémités libres du bras est montée sur le boîtier renfermant le mécanisme de la scie et l'autre extrémité libre du bras comporte des moyens de solidarisation temporaire de la lame.

Outre qu'elle augmente l'encombrement de la scie, la présence de ce bras limite bien évidemment la distance entre le bord du matériau à chantourner et la zone affectée par le chantournage.

Le fait d'ajouter sur la plaque vibrante au moins une masse d'inertie permet de se passer de ce bras dans des circonstances particulières.

Cette ou ces masses peuvent être constituées par de petits blocs métalliques qui augmentent l'inertie de la plaque vibrante accroissant ainsi son effet ressort, fonction qui, normalement, est remplie par le bras en U. Cet accroissement de l'inertie de la plaque vibrante permet de travailler avec une lame qui n'est réunie qu'à ladite plaque, l'autre extrémité de la lame restant libre. On comprend que, dans ces conditions, il est possible de chantourner un matériau sans être limité par la longueur du bras et, également, de chantourner de petites pièces sous un très faible encombrement.

Dans les scies électro-magnétiques actuellement connues, il est prévu des moyens permettant de faire varier l'écartement entre la plaque vibrante et l'électro-aimant pour modifier, selon les besoins, la puissance des vibrations: plus la plaque vibrante est écartée de l'électro-aimant, plus la puissance est faible. Jusqu'ici, les moyens permettant de faire varier l'écartement maintiennent le parallélisme entre la plaque vibrante et l'électro-aimant. Cela ne permet qu'un faible réglage car ou la plaque vibrante est très près de l'électro-aimant, auquel cas elle vient se coller sur celui-ci et il n'y a plus de vibration, ou la plaque est trop éloignée de l'électro-aimant pour réagir sous l'effet de son action.

Selon la présente invention, les moyens permettant de faire varier l'écartement entre la plaque vibrante et l'électro-aimant n'agissent que sur l'une des extrémités de ladite plaque, laissant l'autre extrémité fixe.

De cette manière, la plaque vibrante est déplaçable entre une position parallèle à l'électro-aimant et une position oblique. La partie de la plaque vibrante opposée au côté sur lequel s'exercent les moyens de réglage de l'écartement reste ainsi toujours dans la zone d'action de ce dernier, de sorte que l'on peut davantage jouer sur l'amplitude des vibrations que cela n'était possible avec les dispositifs connus.

Dans les scies à chantourner existantes, la plaque vibrante est maintenue en place par des pinces qui maintiennent ses deux extrémités opposées. Ces pinces maintiennent convenablement la plaque lorsque la pièce à chantourner est déplacée selon un axe qui leur est perpendiculaire, mais moins efficacement lorsque la pièce à chantourner est déplacée transversalement: en effet, la pièce pousse sur la lame de scie qui transmet cet effort à la plaque vibrante, laquelle a tendance à glisser hors des pinces. Il s'ensuit que la base de la lame de scie se décale et que la précision du sciage diminue. Pour remédier à cet inconvénient, les extrémités opposées de la plaque vibrante qui sont pincées sont avantageusement courbes ou forment une ligne brisée et les pinces ont une forme s'adaptant auxdites extrémités.

De cette manière, lorsqu'une poussée transversale est appliquée sur la plaque vibrante, les extrémités de la plaque coincées dans les pinces se bloquent dans le profil complémentaire de ces dernières et la plaque vibrante ne peut glisser.

Dans les scies à chantourner connues, il est prévu, au-dessus de la plaque vibrante, un plateau récepteur pour le matériau à chantourner, ledit plateau présentant un trou de passage pour la lame de scie.

Pour faciliter le pivotement du matériau à scier sur le plateau récepteur, selon l'invention, ce plateau définit une surface saillant vers le haut en direction dudit trou. Le plateau peut, par exemple, être bombé ou être légèrement pyramidal, étant toutefois entendu qu'au voisinage du trou, le plateau peut être plan. Cela réduit la surface de contact entre le plateau et le matériau à découper et facilite son déplacement.

Bien que la scie selon l'invention offre l'avantage de pouvoir fonctionner sans bras en U, il n'est pas toujours possible de se passer d'un tel bras. En particulier, pour effectuer un travail très précis à l'aide d'une lame fine, la présence d'un bras est nécessaire. La scie selon l'invention peut donc en comporter un, du type défini plus haut, mais qui, à la différence des bras antérieurement connus, est composé d'éléments télescopiques. Cela permet, d'une part, de contracter au maximum ce bras pour l'emballage ou le rangement de la scie et, d'autre part, de le dilater au maximum pour permettre le passage de grandes pièces à chantourner. Les propriétés télescopiques du bras en U offrent donc l'avantage de permettre un travail d'autant plus précis que le bras est plus contracté, tout en autorisant un grand dégagement si besoin est.

Pour permettre l'utilisation de lames de longueurs très variées ou même de lames cassées, le ou les éléments formant l'âme du bras en U présentent une courbure dont le centre est à l'extérieur de la zone comprise entre les ailes et l'âme du bras. Cela permet, pour une extension ou une contraction réduite de l'âme, d'obtenir des variations beaucoup plus importantes de la distance entre les extrémités des ailes du bras en U et donc entre les moyens de solidarisation temporaire de la lame.

Dans une forme d'exécution préférée, l'électro-aimant est inclus dans un boîtier isolant formé d'une coquille et d'un fond, et des flasques isolants sont interposés entre le bobinage et les tôles en E de l'électro-aimant.

Outre que cette disposition offre une double isolation, elle simplifie considérablement le montage, réduit les bruits de fonctionnement et évite que des corps étrangers, par exemple, des morceaux de scie cassée, puissent tomber sur l'électro-aimant et le détériorer.

Avantageusement, la plaque vibrante est séparée de la face supérieure du boîtier de l'électro-aimant par des moyens amortisseurs qui, de préférence, sont constitués par au moins une lamelle élastique solidaire de cette face supérieure.

Une forme d'exécution de l'invention, et des variantes, sont décrites ci-après en référence aux dessins annexés dans lesquels:

– la figure 1 est une vue en perspective, partiellement éclatée, de la scie à chantourner selon l'invention;

– les figures 2a à 2f représentent diverses formes possibles pour la plaque vibrante;

– la figure 3 montre, en détail, le plateau récepteur du matériau à chantourner;

– la figure 4 représente les pièces constitutives de l'aile supérieure du bras en U;

– la figure 5 représente les pièces constitutives de l'âme du bras en U;

– la figure 6 représente les pièces constitutives de l'aile inférieure du bras en U;

– la figure 7 montre les deux positions que prennent la scie et les pièces à effet ressort pendant le chantournage, et

– la figure 8 est une vue éclatée de l'électro-aimant et d'une forme d'exécution possible pour son boîtier.

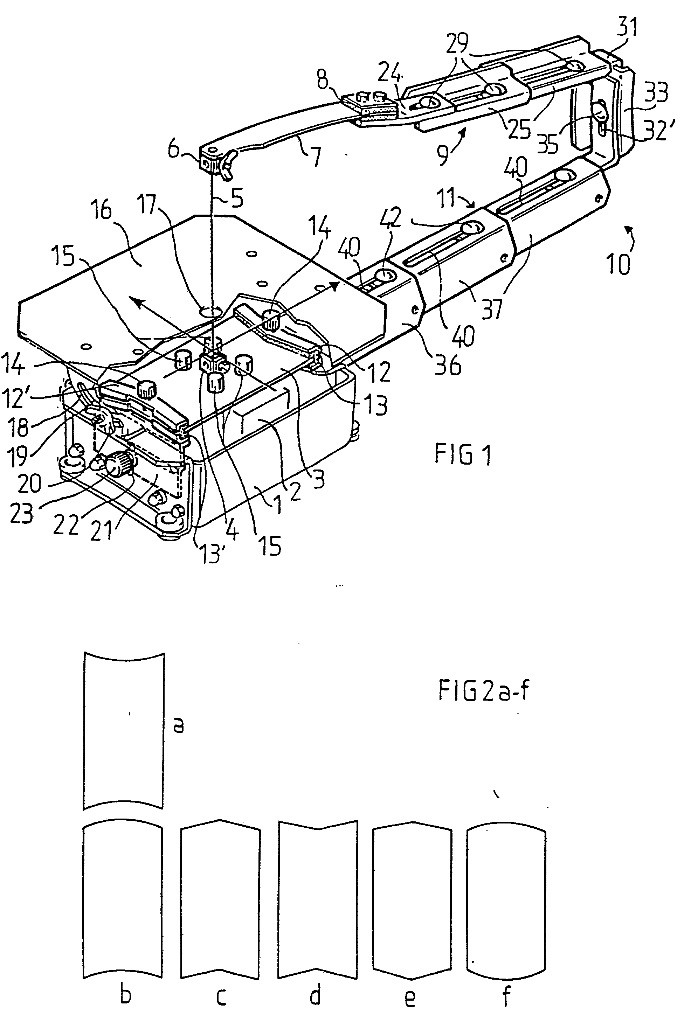

Si l'on se réfère à la figure 1, on voit une scie électro-magnétique à chantourner munie d'un bras en U amovible et dont l'usage est facultatif. La scie comprend un boîtier 1 renfermant un électro-aimant schématisé en 2 et au-dessus duquel se trouve une plaque vibrante 3. La plaque vibrante 3 est munie d'un dispositif 4 de fixation temporaire de l'une des extrémités d'une lame de scie 5 dont l'autre extrémité est reçue dans un dispositif 6 de fixation temporaire solidaire d'une lame de ressort 7. La lame de ressort 7 est elle-même montée, avec interposition d'un matériau amortisseur 8, à l'extrémité de l'une des ailes 9 d'un bras en U 10 dont l'autre aile 11 est fixée au boîtier 1. La structure du bras en U 10 sera décrite en détail plus loin.

Si l'on en revient à la plaque vibrante 3, on voit qu'elle est coincée, par deux de ses côtés opposés, entre deux pinces 12 et 12', avec interposition d'un matériau amortisseur 13–13', l'écartement des mâchoires des pinces 12 et 12' étant réglable au moyen d'une vis 14.

Quatre masses d'inertie 15 sont solidarisées à la plaque vibrante 3.

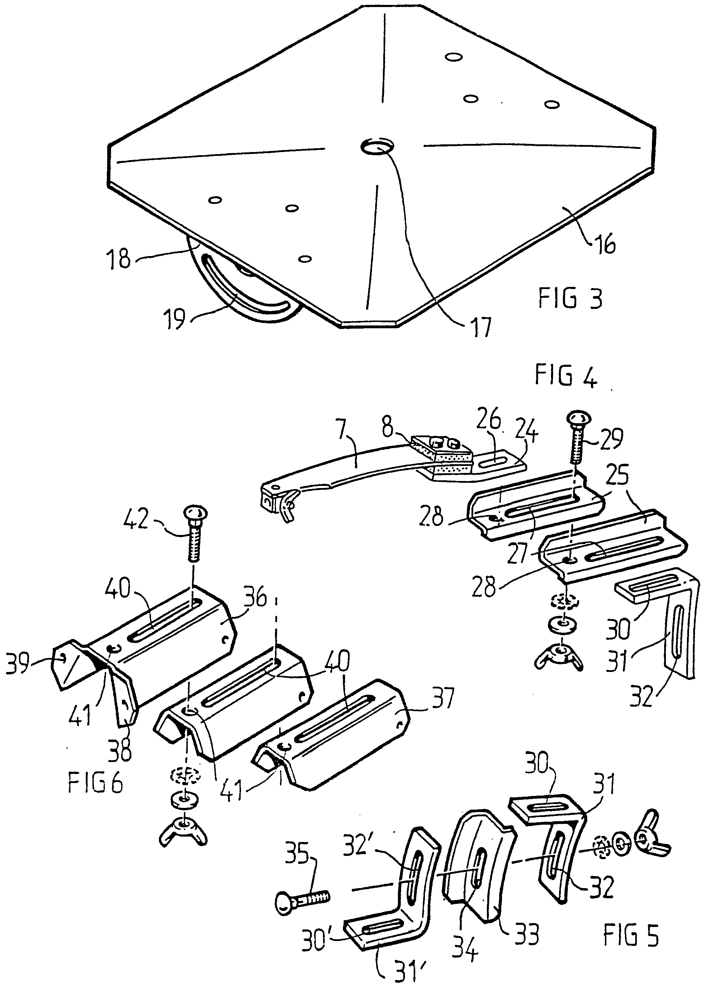

Un plateau 16, adapté à recevoir le matériau à chantourner, est monté au-dessus de la plaque vibrante 3 et il comporte un trou 17 pour le passage de la lame de scie 5. Comme on le voit, ce plateau comporte, de chaque côté, une oreille 18 dans laquelle est pratiquée une fente 19 en arc de cercle traversée par une vise de blocage 20. On comprend que le plateau 16 peut pivoter et être maintenu dans la position choisie par coopération entre la fente 19 et le couple vis-écrou papillon 20. Par ailleurs, comme il ressort de la figure 3, le plateau 16 forme une pyramide très plate tronquée au voisinage du trou 17.

La mâchoire inférieure de la pince 12' se prolonge par une patte 21, représentée en pointillés, comportant une fente 22 avec laquelle coopère une molette 23. Cette molette permet d'élever ou de rabaisser la patte 21 et donc la pince 12' et le côté correspondant de la plaque vibrante 3.

Si l'on se réfère aux figures 2, on voit que les côtés opposés de la plaque vibrante 3 affectés par les pinces 12 et 12', peuvent revêtir diverses formes. Ainsi, ces côtés peuvent être bi-concaves (figure 2a), bi-convexes (figure 2f), concave et convexe (figure 2b), faire deux angles rentrants (figure 2d), deux angles sortants (figure 2e) ou un angle rentrant et un angle sortant (figure 2c).

Les formes d'exécution que l'on préfère sont celles représentées aux figures 2a et 2b. A la figure 1, on utilise une plaque vibrante, telle que représentée à la figure 2a et, comme on le voit, les mâchoires des pinces 12 et 12' sont d'une configuration complémentaire à celle des côtés biconcaves de la plaque 3.

Comme indiqué plus haut, le bras en U 10 est formé d'éléments télescopiques. La structure de ces éléments ressort plus clairement des figures 4 à 6. Ainsi, si l'on se réfère à la figure 4, on voit que l'aile supérieure 9 du bras en U 10 est constituée d'un support 24 pour la lame de ressort 7 et de deux éléments 25 télescopiques. Le support 24 présente une fente 26 et les éléments 25 une fente 27 et un perçage 28. On comprend que les éléments sont réunis par passage d'une première vis (non représentée) dans la fente 26 de l'élément 24 et dans le perçage 28 du premier élément 25, d'une seconde vis 29 dans la fente 27 du premier élément 25 et le perçage 28 du second élément 25, et d'une troisième vis (non représentée) dans la fente 27 du second élément 25 et dans la fente 30 d'une pièce en L 31 appartenant à l'âme du bras en U.

Il est bien évident qu'en jouant sur la position des trois vis dans les fentes 26, 27 et 30, on peut plus ou moins contracter ou resserrer les pièces constitutives de l'aile supérieure 9 du bras en U 10.

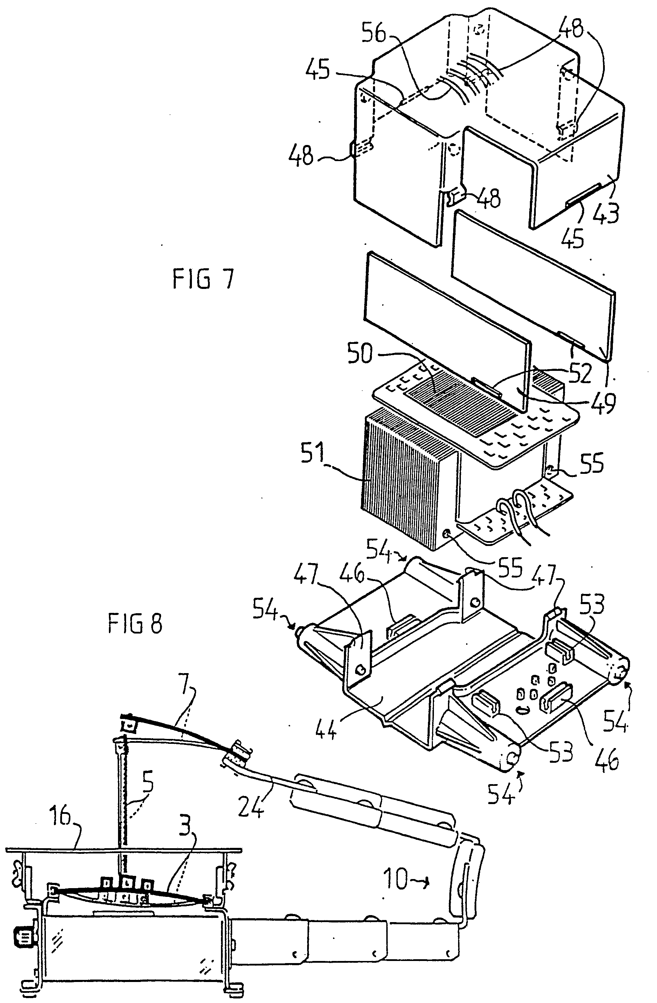

L'âme du bras en U est constituée de deux pièces en L 31 et 31' qui sont identiques mais orientées différemment. Il est clair que la pièce 31 de la figure 5 est la même que la pièce 31 de la figure 4. Outre une fente 30–30', les pièces 31–31' comportent une fente 32–32'. Entre les pièces en L 31–31' est interposée une pièce en Z 33 pourvue d'une fente 34. Les pièces 31, 33 et 31' sont réunies par passage d'une vis 35 dans les fentes 32', 34 et 32 en vis-à-vis, étant entendu, là encore, que l'on peut faire varier la longueur de l'âme du bras en U en jouant sur la position relative de la vis et des fentes.

Comme on le voit, les pièces constitutives de l'âme du bras en U sont légèrement courbes pour la raison indiquée plus haut.

L'aile inférieure 11 du bras en U 10 est constituée d'une pièce de raccordement 36 et de deux éléments télescopiques 37. La pièce de raccordement 36 comporte des oreilles 38 présentant des perçages 39 pour le montage du bras en U 10 sur le boîtier 1 de l'appareil. La pièce de raccordement 36 et les éléments télescopiques 37 sont pourvus chacun d'une fente 40 et d'un perçage 41. Les pièces constitutives de l'aile inférieure du bras en U 10 sont réunies par introduction d'une première vis 42 dans la fente 40 de la pièce de raccordement 36 et le perçage 41 du premier élément 37 et par pénétration d'une seconde vis (non représentée) dans la fente 40 du premier élément 37 et le perçage 41 du second élément 37. Comme dans le cas de l'aile supérieure et de l'âme, la longueur de l'aile inférieure du bras en U 10 peut être réglée en jouant sur la position relative des vis 42 dans les fentes 40.

Si l'on se réfère à la figure 8, on voit une forme d'exécution possible pour le boîtier 1. Ce boîtier est constitué par une coquille 43 et d'un fond 44 qui s'encliquette l'un sur l'autre. A cette fin, deux parois verticales opposées de la coquille 43 sont pourvues de saillies 45 adaptées à pénétrer à force dans des gouttières de retenue 46 prévues dans le fond 44, tandis que ce même fond comporte des parois verticales se terminant par des projections en agrafes 47 adaptées à coopérer avec des projections de forme complémentaire 48 prévues dans la coquille 43.

Des flasques isolants 49 sont interposés entre la bobine 50 et les éléments en E 51 de l'électro-aimant 2. Ces flasques 49 comportent une partie en saillie 52 adaptée à venir s'encliqueter dans des gouttières de retenue 53 prévues sur le fond 44. La solidarisation finale de l'ensemble est faite à l'aide de vis (non représentées) traversant les gorges 54 du fond 44 et les perçages 55 alignés prévus dans les éléments en E 51.

Il est prévu, sur la face supérieure de la coquille 43, une série de lamelles élastiques 56 d'un seul tenant avec la coquille et ayant pour fonction d'empêcher la transmission des vibrations de la plaque vibrante 3 à la coquille 43.

Le fonctionnement de la scie selon l'invention est le suivant:

Lorsqu'elle est livrée, le bras en U est complètement rétracté, c'est-à-dire que les vis 29 et 42 occupent la position opposée à celle qui est représentée à la figure 1. De son côté, la vis 35 passe par le milieu des fentes 32', 34 et 32. Si l'on désire chantourner sans utilisation du bras 10, il suffit de dévisser la pièce de raccordement 36 du boîtier 1. Si, au contraire, on désir laisser en place le bras 10, on règle sa longueur et l'écartement de ses ailes en jouant sur les vis 29, 35 et 42.

On insère une lame 5 dans le dispositif de fixation temporaire 4 dépendant de la plaque vibrante 3 et, le cas échéant, dans le dispositif de fixation temporaire 6 dépendant de la lame de ressort 7.

Selon la nature et l'épaisseur du matériau à chantourner, et le travail à effectuer, on règle la puissance et l'amplitude des vibrations de la lame 5. En ce qui concerne la puissance, on joue sur l'écartement entre la plaque vibrante 3 et l'électro-aimant 2 en remontant plus ou moins la patte 21 à l'aide de la molette 23. Pour ce qui est de l'amplitude, on resserre ou relâche plus ou moins la plaque vibrante 3 dans les pinces 12 et 12' en agissant sur les vis 14.

Si besoin est, on modifie la position du plateau 16 en desserrant la vis 20, en inclinant le plateau 16 et en l'immobilisant en place par resserrage de la vis 20.

La mise sous tension de l'électro-aimant 2, en courant alternatif, provoque, en synchronisme avec les périodes du courant, une succession d'attractions de la plaque 3 et de cessations d'attraction qui se traduisent par une vibration de la plaque 3. L'amplitude de cette vibration est accentuée par l'effet ressort des masses d'inertie 15 prévues sur la plaque vibrante 3 en ce sens que ces masses 15, en augmentant l'inertie de la plaque vibrante 3, amplifient son effet ressort et restituent une force qui est transmise à la lame de scie. L'effet ressort est accru par la lame de ressort 7 si l'on utilise le bras 10. Le matériau amortisseur 8 qui peut être formé de mousse de caoutchouc, de feutre, etc. . . . évite que les vibrations soient transmises au bras 10 puis réenvoyées, sous forme de vibrations parasites, à la lame 5. On limite ainsi l'usure prématurée de la lame 5 et les risques de casse.

Grâce au maintien correct de la plaque vibrante 3 dans les pinces 12, 12', découlant de la forme particulière des côtés opposés de la plaque saisis par les pinces, il est possible de pousser le matériau à chantourner dans les directions matérialisées par les flèches à la figure 1, sans que se décale la plaque vibrante 3 et, par conséquent la lame 5, par rapport au trou 17 du plateau 16.

Dans certains cas, il peut être avantageux de régler le bras en U 10 de telle sorte que les moyens de solidarisation temporaires 6 soient légèrement plus près de la verticale passant par le côté de la plaque 3 opposé au bras 10 que les moyens de solidarisation temporaire 4. Il s'ensuit qu'au repos, la lame 5 est penchée en direction de cette verticale. Cela permet de donner à la lame 5 une direction verticale lorsque l'on procède au chantournage, le matériau traité venant repousser la lame vers le bras en U.

Comme il ressort de la figure 7, chaque vibration fait passer les pièces à effet ressort de la scie (lame de ressort 7, lame de scie 5 et plaque vibrante 3) d'une position haute en retrait vers le bras en U à une position basse projetée.

Cela permet aux dents de la scie de piquer dans le matériau lorsqu'elles passent de la position haute à la position basse et de se retirer du matériau lorsqu'elles passent de la position basse à la position haute.

La scie selon l'invention est plus particulièrement destinée au découpage dans du bois ou
matériau similaire, pour effectuer de la marqueterie, des maquettes, des modèles réduits, mais
également au découpage de produits congelés et
à l'accomplissement de travaux d'ornement, de
décoration ou d'aménagement de locaux d'habitation.

Il est bien entendu que l'invention n'est pas
limitée aux formes d'exécution décrites et représentées. En particulier, le nombre d'éléments
télescopiques composant le bras pourrait être
supérieur ou inférieur, les côtés opposés de la
plaque vibrante pourrait avoir toute autre forme
remplissant une fonction équivalente, etc.

## Revendications

1. Scie électro-magnétique à chantourner du
type comportant d'une part, une lame (5) dont
l'une des extrémités est solidaire d'une plaque (3)
qui est susceptible de vibrer sous l'effet d'un électro-aimant (2) alimenté en courant alternatif, la
plaque (3) comportant au moins une masse d'inertie (15), cette plaque (3) vibrante étant maintenue
en place par des pinces qui maintiennent ses deux
extrémités opposées, et d'autre part, des moyens
(21, 23) permettant de faire varier l'écartement
entre la plaque vibrante (3) et l'électro-aimant (2),
caractérisée en ce que ces moyens (21, 23) n'agissent que sur l'une des extrémités de ladite plaque
(3), laissant l'autre extrémité fixe.

2. Scie selon la revendication 1, caractérisée en
ce que lesdites extrémités opposées sont courbes
ou forment une ligne brisée et en ce que les pinces (12–12') ont une forme s'adaptant auxdites
extrémités.

3. Scie selon la revendication 1 ou 2 comprenant, au-dessus de la plaque vibrante, un plateau
récepteur pour le matériau à découper, ledit plateau présentant un trou de passage pour la lame
de scie, caractérisée en ce que ce plateau (16)
définit une surface saillant vers le haut en direction dudit trou (17).

4. Scie selon l'une quelconque des revendications 1 à 3 dans laquelle l'autre extrémité de la
lame est solidarisée en bout d'un bras à effet
ressort revêtant la forme générale d'un U, caractérisé en ce que ce bras est composé
d'éléments télescopiques (24, 25, 31, 33, 31', 37,
36).

5. Scie selon la revendication 4, caractérisée en
ce que le ou les éléments (31, 33, 31') formant
l'âme du bras en U (10) présentent une courbure
dont le centre est à l'extérieur de la zone comprise
entre les ailes et l'âme des bras en U.

6. Scie selon l'une quelconque des revendications 1 à 5, caractérisée en ce que l'électro-aimant
(2) est inclus dans un boîtier isolant formé d'une
coquille (43) et d'un fond (44) et en ce que des
flasques isolants (49) sont interposés entre la bobine (50) et les éléments en E (51) de l'électro-
aimant (2).

7. Scie selon la revendication 6, dans laquelle la
plaque vibrante est séparée de la face supérieure
du boîtier de l'électro-aimant par des moyens
amortisseurs, caractérisé en ce que les moyens
amortisseurs sont constitués par au moins une
lamelle élastique (56) solidaire de cette face supérieure.

## Claims

1. An electro-magnetic saw for jig-sawing of the
type comprising, on the one hand, a blade one of
whose ends is secured to a plate (3) which is
capable of vibrating under the effect of an electro-
magnet (2) supplied with AC current, the plate (3)
being provides with at least one inertia mass (15),
said vibrating plate being held in position by
clamps which maintain its two opposite ends and,
on the other hand, means (21, 23) for varying the
spacing between vibrating plate (3) and the electro-magnet (2), characterized in that these means
(21, 23) only act on one of the ends of said plate (3),
letting the other end stationary.

2. The saw according to claim 1, characterized
in that said opposite ends are curved or form a
broken line and in that the clamps (12–12') have a
shape which fits to said ends.

3. The saw according to claim 1 or 2 comprising,
above the vibrating plate, a plate for receiving the
material to be cut up, said plate having a hole for
passing the saw blade therethrough, characterized in that this plate (16) defines a surface
projecting upwardly in the direction of said hole
(17).

4. The saw according to anyone of claims 1 to 3
in which the upper end of the blade is firmly fixed
to the end of a spring arm having the general
shape of a U, characterized in that this arm is
formed from telescopic elements (24, 25, 31, 33,
31', 37, 36).

5. The saw according to claim 4, characterized
in that the element or elements (31, 33, 31') forming the web of the U shaped arm (10) have a
curvature whose center is outside the zone between the flanges and the web of the U shaped
arms.

6. The saw according to anyone of claims 1 to 5,
characterized in that the electro-magnet (2) is contained in an insulating case formed from a shell
(43) and a bottom (44) and in that insulating cheeks
(49) are engaged between the coil (50) and the E
shaped elements (51) of the electro-magnet (2).

7. The saw according to claim 6, in which the
vibrating plate is separated from the upper face of
the case of the electro-magnet by damping means,
characterized in that the damping means are
formed by at least one resilient blade (56) secured
to this upper face.

## Patentansprüche

1. Elektromagnetische Laubsäge von der Art,
welche einerseits ein Blatt (5), dessen eines Ende
fest mit einer Platte (3) verbunden ist, die unter
der Wirkung eines mit Wechselstrom gespeisten
Elektromagneten (2) schwingen kann, wobei die
Platte (3) wenigstens eine Trägheitsmasse (15) aufweist und diese schwingende Platte (3) in ihrer Lage durch Klemmen gehalten ist, die ihre gegenüberliegenden Enden halten, und andererseits Mittel (21, 23) umfasst, die ermöglichen, den Abstand zwischen der schwingenden Platte (3) und dem Elektromagneten (2) zu verändern, dadurch gekennzeichnet, dass diese Mittel (21, 23) nur auf eines der Enden der genannten Platte (3) wirken, wobei das andere Ende fest bleibt.

2. Säge nach Anspruch 1, dadurch gekennzeichnet, dass die genannten, gegenüberliegenden Enden gekrümmt sind oder eine gebrochene Linie bilden und dass die Klemmen (12–12') eine an die genannten Enden angepasste Form aufweisen.

3. Säge nach Anspruch 1 oder 2 mit einer Aufnahmeplatte oberhalb der schwingenden Platte für das zu sägende Material, wobei die genannte Platte ein Durchgangsloch für das Sägeblatt aufweist, dadurch gekennzeichnet, dass diese Platte (16) eine nach oben in Richtung des genannten Lochs (17) vorstehende Oberfläche festlegt.

4. Säge nach irgendeinem der Ansprüche 1 bis 3, bei der das andere Ende des Blatts an dem Ende eines federnden Arms befestigt ist, der allgemeine die Form eines U aufweist, dadurch gekennzeichnet, dass dieser Arm aus Teleskopelementen (24, 25, 31, 33, 31', 37, 36) zusammengesetzt ist.

5. Säge nach Anspruch 4, dadurch gekennzeichnet, dass das oder die Elemente (31, 33, 31'), die das Innerste des U-Arms (10) bilden, eine Krümmung aufweisen, deren Mittelpunkt ausserhalb des zwischen den Schenkeln und dem Innersten des U-Arms umfassten Bereichs liegt.

6. Säge nach irgendeinem der Ansprüche 1 bis 5, dadurch gekennzeichnet, dass der Elektromagnet (2) in einem isolierten Gehäuse eingeschlossen ist, welches von einer Schale (43) und einem Boden (44) gebildet ist, und dass Isolierblätter (49) zwischen der Spule (50) und den E-förmigen Elementen (51) des Elektromagneten (2) eingefügt sind.

7. Säge nach Anspruch 6, bei der die schwingende Platte von der Oberseite des Gehäuses des Elektromagneten durch Dämpfungsmittel getrennt ist, dadurch gekennzeichnet, dass die Dämpfungsmittel von wenigstens einer elastischen, mit dieser Oberseite verbundenen Lamelle (56) gebildet sind.

FIG 1

FIG 2a-f

FIG 3

FIG 4

FIG 6

FIG 5

FIG 7

FIG 8